# EUROPEAN PATENT APPLICATION

(11) **EP 4 622 352 A1**
(43) Date of publication of application: **24.09.2025**
(21) Application number: 23905942.1
(22) Date of filing: 19.12.2023
(51) Int. Cl.: H04W 52/02

(54) **NETWORK ENERGY SAVING METHOD AND APPARATUS, AND STORAGE MEDIUM**

(30) Priority: 20.12.2022 CN 202211644455
(71) Applicant: CHINA MOBILE COMMUNICATION CO., LTD RESEARCH INSTITUTE, Beijing 100053 (CN); China Mobile Communications Group Co., Ltd, Beijing 100032 (CN)
(72) Inventor: SHI, Nanxiang, Beijing 100032 (CN); SHI, Xiaonan, Beijing 100032 (CN); LU, Lu, Beijing 100032 (CN)
(74) Representative: Murgitroyd & Company
(86) International application number: PCT/CN2023/139830
(87) International publication number: WO 2024/131779

(57) **Abstract**

A network energy-saving method, an apparatus and a storage medium are provided. The method includes: obtaining first energy-saving preference information and/or second energy-saving preference information; wherein the first energy-saving preference information represents network preference information of a target terminal; the second energy-saving preference information represents network preference information of a terminal group; generating a device-level energy-saving instruction and/or a user-level energy-saving instruction based on the first energy-saving preference information and/or the second energy-saving preference information; sending the device-level energy-saving instruction and/or the user-level energy-saving instruction to a target network; wherein the device-level energy-saving instruction and/or the user-level energy-saving instruction are received by the target network and used to perform an energy-saving optimization operation; the target network comprises a core network and/or an access network.

## Description

### CROSS-REFERENCE TO RELATED APPLICATION

The present application claims a priority to the Chinese patent application No. 202211644455.8 filed in China on December 20, 2022, a disclosure of which is incorporated herein by reference in its entirety.

### TECHNICAL FIELD

The present disclosure relates to the field of a Core Network (CN), and in particular, to a network energy-saving method, an apparatus and a storage medium.

### BACKGROUND

An International Mobile Telecommunications (IMT)-2020/5th Generation Mobile Communication Technology (5G) network is designed for three major scenarios: Enhanced Mobile Broadband (eMBB), Ultra Reliable & Low Latency Communication (uRLLC) and Massive Machine Type Communication (mMTC). It adopts a service-oriented and cloud-based architecture, enhances the openness and sharing of the network, introduces new technologies such as network slicing and edge computing, and provides the public and industry users with diversified personal and vertical industry applications. However, the enhancement of communication capabilities and the enrichment of application scenarios have also led to higher energy consumption in the IMT-2020/5G network. Although the per-unit traffic energy consumption of the IMT-2020/5G network has been significantly reduced compared with the 4th Generation Mobile Communication Technology (4G) through an architecture enhancement and performance optimization, the overall energy consumption of the IMT-2020/5G network has increased significantly compared with the 4G network. For example, the power consumption of a single 5G base station is 3 to 4 times that of a 4G base station. In this context, an energy-saving network has become a global research focus for 5G and 6G communication technologies. Green and lowcarbon development has become one of the main goals of building an intelligent, comprehensive digital information infrastructure. Standards organizations such as the International Telecommunication Union (ITU), the 3rd Generation Partnership Project (3GPP), and the China Communications Standards Association (CCSA) have also proposed some energy-saving network architecture design methods and technical solutions.

The technical methods for energy-saving networks provided in related art mainly include a cloud platform with resource sharing, a streamlined network architecture design, separation of control and data, separation of control and bearer, an efficient air interface design, an efficient network function design, efficient hardware, energy-saving management (such as system-level sleep, energy consumption policy management, energy consumption Artificial Intelligence (AI) optimization), and the application of new energy sources, etc. The above-mentioned technical methods of energy-saving networks effectively reduce the energy consumption of communication networks. For example, the power consumption of a single 5G base station has dropped by about 35% compared to the early stage of commercialization, saving 10%-30% in low-load scenarios and 50% in extremely low-load scenarios. Although some technical methods for network energy-saving have already been proposed in the related art, energy consumption is still an important constraint limiting the scale development of communication networks. The industry believes that the requirements and indicators of the 6th Generation Mobile Networks (6G) will be significantly improved compared with the 5G network. The traffic density is expected to reach 0.1-10Gbps/m² (compared to 10Mbps/m² for the 5G network), and the connection density is expected to reach 10-100 million devices/km² (compared to 1 million devices/km² for the 5G network). The 6G network will place even higher requirements for network energy-saving, which requires the introduction of new technical methods for the energy-saving network.

### SUMMARY

In view of the above, a main object of the present disclosure is to provide a network energy-saving method, an apparatus and a storage medium.

To achieve the above objective, the technical solutions of the present disclosure are implemented as follows.

In a first aspect, an embodiment of the present disclosure provides a network energy-saving method, applied to an energy-saving device, including:
obtaining first energy-saving preference information and/or second energy-saving preference information; the first energy-saving preference information represents network preference information of a target terminal; the second energy-saving preference information represents network preference information of a terminal group;
generating a device-level energy-saving instruction and/or a user-level energy-saving instruction based on the first energy-saving preference information and/or the second energy-saving preference information;
sending the device-level energy-saving instruction and/or the user-level energy-saving instruction to a target network; the device-level energy-saving instruction and/or the user-level energy-saving instruction are received by the target network and used to perform an energy-saving optimization operation; the target network includes a core network and/or an access network.

In the above solution, the obtaining the first energy-saving preference information and/or the second energy-saving preference information includes at least one of the followings:
receiving the first energy-saving preference information from the target terminal, wherein the first energy-saving preference information includes: a network access type preference and/or a connection rate preference; or
receiving the second energy-saving preference information from a service application device, wherein the second energy-saving preference information includes at least one of the followings: a basic communication capability preference, an enhanced communication capability preference, or an application preference.

In the above solution, the generating the user-level energy-saving instruction based on the first energy-saving preference information and/or the second energy-saving preference information includes:
determining, based on the first energy-saving preference information and/or the second energy-saving preference information, at least one preference of the target terminal among a network access type preference, a connection rate preference, a basic communication capability preference, an enhanced communication capability preference, and an application preference;
determining the user-level energy-saving instruction corresponding to the target terminal based on the at least one preference.

In the above solution, the determining the user-level energy-saving instruction corresponding to the target terminal based on the at least one preference includes:
determining, based on the network access type preference, an expected connection probability for the target terminal to access at least one type of access network;
determining, based on the connection rate preference and the expected connection probability for the target terminal to access the at least one type of access network, expected average uplink and downlink rates corresponding to the at least one type of access network;
determining, based on the basic communication capability preference and/or the enhanced communication capability preference and in combination with a resource condition of the core network and/or the at least one type of access network, a user-level parameter corresponding to the core network and/or the at least one type of access network;
generating the user-level energy-saving instruction based on the expected average uplink and downlink rates corresponding to the at least one type of access network and the user-level parameter corresponding to the core network and/or the at least one type of access network.

In the above solution, the generating the device-level energy-saving instruction based on the first energy-saving preference information and/or the second energy-saving preference information includes:
determining, based on the first energy-saving preference information and/or the second energy-saving preference information, a statistical value of at least one preference of the terminal group among a network access type preference, a connection rate preference, a basic communication capability preference, an enhanced communication capability preference, and an application preference;
determining the device-level energy-saving instruction corresponding to the terminal group based on the determined statistical value of the at least one preference.

In the above solution, the determining the device-level energy-saving instruction corresponding to the terminal group based on the determined statistical value of the at least one preference includes:
determining, based on the statistical value of the network access type preference, the expected average number of terminals among the terminal group that access at least one type of access network and the expected average number of terminals among the terminal group that access the core network;
calculating an expected capacity requirement corresponding to the at least one type of access network and an expected capacity requirement corresponding to the core network based on the expected average number of terminals that access the at least one type of access network, the expected average number of terminals that access the core network, and the statistical value of the connection rate preference;
generating as the device-level energy-saving instruction, based on the expected capacity requirement corresponding to the at least one type of access network and the expected capacity requirement corresponding to the core network, a capacity adjustment instruction for the core network and the at least one type of access network in the area where the terminal group is located.

In the above solution, the determining the device-level energy-saving instruction corresponding to the terminal group based on the determined statistical value of the at least one preference includes:
determining, based on the statistical value of the basic communication capability preference and/or the statistical value of the enhanced communication capability preference, information of a network function configuration and/or information of a service capability configuration corresponding to the core network and the at least one type of access network, and an expected average number of terminals corresponding to the network function configuration and/or the service capability configuration;
generating as the device-level energy-saving instruction, based on the information of the network function configuration and/or the information of the service capability configuration and the expected average number of terminals corresponding to the network function configuration and/or the service capability configuration, a first configuration parameter adjustment instruction for the core network and the at least one type of access network in the area where the terminal group is located.

In the above solution, the determining the device-level energy-saving instruction corresponding to the terminal group based on the determined statistical value of the at least one preference includes:
determining application support configuration information corresponding to the core network and the at least one type of access network, and an expected average number of terminals corresponding to the application support configuration information based on the statistical value of the application preference;
generating as the device-level energy-saving instruction, based on the application support configuration information and the expected average number of terminals corresponding to the application support configuration information, a second configuration parameter adjustment instruction for the core network and the at least one type of access network in an area where the terminal group is located.

In a second aspect, an embodiment of the present disclosure provides a network energy-saving method, applied to a network device, including:
receiving a device-level energy-saving instruction and/or a user-level energy-saving instruction from an energy-saving device;
performing an energy-saving optimization operation based on the device-level energy-saving instruction and/or the user-level energy-saving instruction.

In the above solution, the performing the energy-saving optimization operation based on the user-level energy-saving instruction includes:
determining a resource requirement for each target terminal based on the user-level energy-saving instruction for at least one target terminal;
when a network resource is capable of simultaneously meeting the resource requirement of all of the at least one target terminal, performing the energy-saving optimization operation based on the user-level energy-saving instruction;
when the network resource is incapable of simultaneously meeting the resource requirement of all of the at least one target terminal, performing a respective energy-saving optimization operation for each of the at least one target terminal based on a priority of each target terminal.

In the above solution, the performing the energy-saving optimization operation based on the device-level energy-saving instruction includes:
determining a total resource requirement based on the device-level energy-saving instruction;
when a network resource is capable of meeting the total resource requirement, performing the energy-saving optimization operation based on the device-level energy-saving instruction;
when the network resource is incapable of meeting the total resource requirement, sending an error response to the energy-saving device.

In a third aspect, an embodiment of the present disclosure provides a network energy-saving apparatus, applied to energy-saving device, including:
an obtaining module, configured to obtain first energy-saving preference information and/or second energy-saving preference information; the first energy-saving preference information represents network preference information of a target terminal; the second energy-saving preference information represents network preference information of a terminal group;
a processing module, configured to generate a device-level energy-saving instruction and/or a user-level energy-saving instruction based on the first energy-saving preference information and/or the second energy-saving preference information;
a sending module, configured to send the device-level energy-saving instruction and/or the user-level energy-saving instruction to a target network; wherein the device-level energy-saving instruction and/or the user-level energy-saving instruction is received by the target network and used to perform an energy-saving optimization operation; the target network includes a core network and/or an access network.

In the above solution, the obtaining module is configured to perform at least one of the followings:
receiving the first energy-saving preference information from the target terminal, wherein the first energy-saving preference information includes: a network access type preference and/or a connection rate preference; or
receiving the second energy-saving preference information from a service application device, wherein the second energy-saving preference information includes at least one of the followings: a basic communication capability preference, an enhanced communication capability preference, or an application preference.

In the above solution, the processing module is configured to: determine, based on the first energy-saving preference information and/or the second energy-saving preference information, at least one preference of the target terminal among a network access type preference, a connection rate preference, a basic communication capability preference, an enhanced communication capability preference, and an application preference;
determine the user-level energy-saving instruction corresponding to the target terminal based on the at least one preference.

In the above solution, the processing module is specifically configured to: determine, based on the network access type preference, an expected connection probability for the target terminal to access at least one type of access network;
determine, based on the connection rate preference and the expected connection probability for the target terminal to access the at least one type of access network, expected average uplink and downlink rates corresponding to the at least one type of access network;
determine, based on the basic communication capability preference and/or the enhanced communication capability preference and in combination with a resource condition of the core network and/or the at least one type of access network, a user-level parameter corresponding to the core network and/or the at least one type of access network;
generate the user-level energy-saving instruction based on the expected average uplink and downlink rates corresponding to the at least one type of access network and the user-level parameter corresponding to the core network and/or the at least one type of access network.

In the above solution, the processing module is configured to determine, based on the first energy-saving preference information and/or the second energy-saving preference information, a statistical value of at least one preference of the terminal group among a network access type preference, a connection rate preference, a basic communication capability preference, an enhanced communication capability preference, and an application preference;
determine the device-level energy-saving instruction corresponding to the terminal group based on the determined statistical value of the at least one preference.

In the above solution, the processing module is specifically configured to: determine, based on the statistical value of the network access type preference, the expected average number of terminals among the terminal group that access at least one type of access network and the expected average number of terminals among the terminal group that access the core network;
calculate an expected capacity requirement corresponding to the at least one type of access network and an expected capacity requirement corresponding to the core network based on the expected average number of terminals that access the at least one type of access network, the expected average number of terminals that access the core network, and the statistical value of the connection rate preference;
generate as the device-level energy-saving instruction, based on the expected capacity requirement corresponding to the at least one type of access network and the expected capacity requirement corresponding to the core network, a capacity adjustment instruction for the core network and the at least one type of access network in the area where the terminal group is located.

In the above solution, the processing module is specifically configured to: determine, based on the statistical value of the basic communication capability preference and/or the statistical value of the enhanced communication capability preference, information of a network function configuration and/or information of a service capability configuration corresponding to the core network and the at least one type of access network, and an expected average number of terminals corresponding to the network function configuration and/or the service capability configuration;
generate as the device-level energy-saving instruction, based on the information of the network function configuration and/or the information of the service capability configuration and the expected average number of terminals corresponding to the network function configuration and/or the service capability configuration, a first configuration parameter adjustment instruction for the core network and the at least one type of access network in the area where the terminal group is located.

In the above solution, the processing module is specifically configured to: determine application support configuration information corresponding to the core network and the at least one type of access network, and an expected average number of terminals corresponding to the application support configuration information based on the statistical value of the application preference;
generate as the device-level energy-saving instruction, based on the application support configuration information and the expected average number of terminals corresponding to the application support configuration information, a second configuration parameter adjustment instruction for the core network and the at least one type of access network in an area where the terminal group is located.

In a fourth aspect, an embodiment of the present disclosure provides a network energy-saving apparatus, applied to a network device, including:
a receiving module, configured to receive a device-level energy-saving instruction and/or a user-level energy-saving instruction from an energy-saving device;
an energy-saving module, configured to perform an energy-saving optimization operation based on the device-level energy-saving instruction and/or the user-level energy-saving instruction.

In the above solution, the energy-saving module is configured to determine a resource requirement for each target terminal based on the user-level energy-saving instruction for at least one target terminal;
when a network resource is capable of simultaneously meeting the resource requirement of all of the at least one target terminal, performing the energy-saving optimization operation based on the user-level energy-saving instruction;
when the network resource is incapable of simultaneously meeting the resource requirement of all of the at least one target terminal, performing a respective energy-saving optimization operation for each of the at least one target terminal based on a priority of each target terminal.

In the above solution, the energy-saving module is configured to determine a total resource requirement based on the device-level energy-saving instruction;
when a network resource is capable of meeting the total resource requirement, performing the energy-saving optimization operation based on the device-level energy-saving instruction;
when the network resource is incapable of meeting the total resource requirement, sending an error response to the energy-saving device.

In a fifth aspect, an embodiment of the present disclosure provides a network energy-saving apparatus, including a memory, a processor, and a computer program stored in the memory and executable on the processor, wherein the processor is configured to execute the program, to implement the steps of any one of the methods performed on the energy-saving device side; or the processor is configured to execute the program, to implement the steps of any one of the methods performed on the network device side.

In a sixth aspect, an embodiment of the present disclosure provides a computer-readable storage medium storing a computer program, wherein the computer program is used to be executed by a processor to implement the steps of any one of the methods performed on the energy-saving device side; or, the computer program is used to be executed by the processor to implement the steps of any one of the methods performed on the network device side.

The embodiments of the present disclosure provide a network energy-saving method, an apparatus and a storage medium, the method including: an energy-saving device obtains first energy-saving preference information and/or second energy-saving preference information; the first energy-saving preference information represents network preference information of a target terminal; the second energy-saving preference information represents network preference information of a terminal group; generating a device-level energy-saving instruction and/or a user-level energy-saving instruction based on the first energy-saving preference information and/or the second energy-saving preference information; sending the device-level energy-saving instruction and/or the user-level energy-saving instruction to a target network; the device-level energy-saving instruction and/or the user-level energy-saving instruction are received by the target network and used to perform an energy-saving optimization operation; the target network includes a core network and/or an access network. In the solutions provided by the embodiments of the present disclosure, it generates a user-level energy-saving instruction for a single terminal and/or a device-level energy-saving instruction for the entire terminal group based on the network preference of the single terminal and the network preference of the terminal group, and performs energy-saving operations based on the user-level energy-saving instruction and/or the device-level energy-saving instruction. In this way, it performs an energy-saving operation based on the user-level energy-saving instruction, so as to achieve energy-saving optimization at user granularity and meets a refined energy-saving requirement; in addition, it performs the energy-saving operation based on the device-level energy-saving instruction, so as to achieve an overall optimization of the end-to-end system and meet an end-to-end energy-saving requirement.

### BRIEF DESCRIPTION OF THE DRAWINGS

FIG. 1 is a schematic flowchart of a network energy-saving method provided by an embodiment of the present disclosure;
FIG. 2 is another schematic flowchart of a network energy-saving method provided by an embodiment of the present disclosure;
FIG. 3 is an energy-saving network system based on a user preference and competition provided by an embodiment of the present disclosure;
FIG. 4 is a schematic flowchart of an energy-saving network method based on user preference and competition provided by an embodiment of the present disclosure;
FIG. 5 is a structural diagram of a network energy-saving apparatus provided by an embodiment of the present disclosure;
FIG. 6 is another structural diagram of the network energy-saving apparatus provided by an embodiment of the present disclosure;
FIG. 7 is yet another structural diagram of the network energy-saving apparatus provided by an embodiment of the present disclosure.

### DETAILED DESCRIPTION

Before providing a detailed explanation of the present disclosure, the methods of the related art will be described first.

The technical methods of energy-saving networks in related art mainly carry out energy-saving design and energy-saving optimization in a core network domain and an access network domain, and there are the following technical gaps and technical defects.
1. In the solutions of the related art, it does not carry out energy-saving design for an end-to-end system. The network energy-saving is carried out in the local scope of the core network and access network, and energy-saving optimization is carried out for individual devices. There is no centralized control node responsible for energy-saving optimization in the network, and cross-domain integration is not achieved. Local energy-saving optimization can reduce the energy consumption of the affected individual device, but it has limited effect on reducing the overall energy consumption of the end-to-end system, and may even lead to increased energy consumption of other unaffected devices in the end-to-end system, making it difficult to meet the end-to-end energy-saving requirements of future networks.
2. The solutions in the related art do not combine user requirements and user characteristics for energy-saving optimization, and do not consider user's energy-saving preferences. When the user can accept lower connection rate, service quality, service availability, and service continuity, the network still provides the highest quality communication service allowed by the available resource, resulting in increased network energy consumption. The network energy-saving configuration is only available at the device level and not at the user level, resulting in energy-saving optimization only at device granularity, without achieving user-level granularity optimization, which makes it difficult to meet the refined energy-saving requirement of the future network.

Based on this, an embodiment of the present disclosure provides a method, wherein the energy-saving device obtains first energy-saving preference information and/or second energy-saving preference information; the first energy-saving preference information represents network preference information of a target terminal; the second energy-saving preference information represents network preference information of a terminal group; based on the first energy-saving preference information and/or the second energy-saving preference information, a device-level energy-saving instruction and/or a user-level energy-saving instruction is generated; the device-level energy-saving instruction and/or the user-level energy-saving instruction is sent to a target network; the device-level energy-saving instruction and/or the user-level energy-saving instruction is received by the target network and used to perform an energy-saving optimization operation; the target network includes a core network and/or an access network. In this way, the performing the energy-saving operation based on the user-level energy-saving instruction realizes energy-saving optimization at user granularity and meets the requirements of refined energy-saving; and the performing the energy-saving operation based on the device-level energy-saving instruction realizes overall optimization of the end-to-end system and meets the requirements of end-to-end energy-saving.

The present disclosure will be further described in detail below in conjunction with the embodiments.

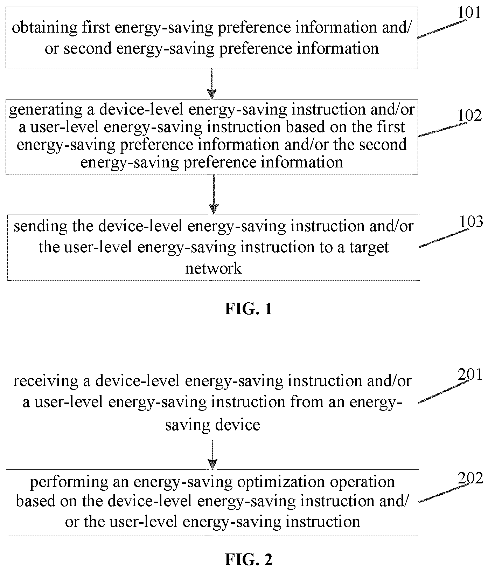

FIG. 1 is a schematic flowchart of a network energy-saving method provided by an embodiment of the present disclosure; as shown in FIG. 1, the method can be applied to an energy-saving device, including:
step 101: obtaining first energy-saving preference information and/or second energy-saving preference information; wherein the first energy-saving preference information represents network preference information of a specific terminal; the second energy-saving preference information represents network preference information of a terminal group;
step 102: generating a device-level energy-saving instruction and/or a user-level energy-saving instruction based on the first energy-saving preference information and/or the second energy-saving preference information;
step 103: sending the device-level energy-saving instruction and/or the user-level energy-saving instruction to a target network; wherein the device-level energy-saving instruction and/or the user-level energy-saving instruction is received by the target network and used to perform an energy-saving optimization operation; the target network includes a core network and/or an access network.

The access network includes at least one of the followings: a satellite access network, a mobile access network, or a fixed access network. Generally speaking, the communication system must include the mobile access network, and may include, depending on actual conditions, the satellite access network and the fixed access network. The fixed access network, the mobile access network and/or the satellite access network can perform device-level energy-saving optimization based on the device-level energy-saving instruction, including adjusting access configuration, adjusting device capacity, enabling a device sleep mode, etc.; user-level energy-saving optimization is performed based on the user-level energy-saving instruction and a user competition mechanism (when resources are insufficient, resources are allocated based on the user priority corresponding to each terminal), including adjusting uplink and downlink rates, adjusting a terminal Quality of Service (QoS) level, etc., and feeding back an energy-saving optimization result to the energy-saving device.

The core network is a multi-access converged core network (hereinafter referred to as the core network), and multi-access convergence includes Fixed Mobile Convergence (FMC) and Fixed, Mobile and Satellite Convergence (FMSC). The core network can perform device-level energy-saving optimization based on the device-level energy-saving instruction, including adjusting network configuration, adjusting device capacity, enabling a device sleep mode, etc.; the user-level energy-saving optimization can be performed based on the user-level energy-saving instruction and the user competition mechanism (when resources are insufficient, resources are allocated based on the user priority corresponding to each terminal), including adjusting network resource allocation, adjusting the user Quality of Service (QoS) level, etc., and feeding back the energy-saving optimization result to the energy-saving device.

In the practical application, the first energy-saving preference information may be sent by the terminal to the energy-saving device, and the second energy-saving preference information may be sent by the service application device to the energy-saving device after statistics of the service application device.

Based on this, in some embodiments, the obtaining the first energy-saving preference information and/or the second energy-saving preference information includes at least one of the followings:
receiving the first energy-saving preference information from the target terminal, wherein the first energy-saving preference information includes: a network access type preference and/or a connection rate preference; or
receiving the second energy-saving preference information from a service application device, wherein the second energy-saving preference information includes at least one of the followings: a basic communication capability preference, an enhanced communication capability preference, or an application preference.

The network access type preference includes: fixed access, mobile access, and satellite access.

The connection rate preference includes: an average connection rate requirement, busy and idle periods, etc.

The basic communication capability includes: voice, video, messaging, data, etc.

The enhanced communication capability includes: QoS, network slicing, edge computing, etc.

An application may also be referred to as an application program.

User's energy-saving preferences regarding the access type, the connection rate, the basic communication capability, the enhanced communication capability, and the application can be used for the device-level energy-saving optimization and the user-level energy-saving optimization. Examples are as follows.

When the user prefers to obtain a lower service fee rate, and can accept a lower connection rate, service quality and service continuity; the access network and core network device serving the user can reduce the user's uplink and downlink rates and reduce the network resource allocation to the user, thereby achieving energy-saving.

When the user does not prefer to use satellite access but can accept lower service availability and service continuity, the satellite access network and the core network device serving the user may disable the satellite access and satellite handover related capabilities for the user, so as to save energy.

When the terminal group in a certain area mainly uses fixed access from 19:00 p.m. to 7:00 a.m., and the mobile access traffic is relatively low, the mobile access network device serving this user group can reduce device capacity to achieve the energy saving.

When the mobile access and fixed access coverage in a certain area is good and, under a non-disaster situation, the user group in this area will have no demand for satellite access; the satellite access network device serving the user group can enable a device sleep mode in the non-disaster situation, thereby achieving the energy-saving.

In practice, to collect the user's energy-saving preferences, under the premise of user authorization, the user configures the energy-saving preferences on the terminal and service application device and reports them to the energy-saving device. The service application device can be a server of an application provided by the operator's service platform, such as a voice server, which can collect the energy-saving preferences of multiple users.

The user can configure the energy-saving preferences for network access types (such as fixed access, mobile access, satellite access) and connection rates through a human-machine interaction interface provided by the terminal; for example, the preferred network access type, the average connection rate requirement, busy and idle periods, a corresponding service fee rate, etc. The terminal determines the user's energy-saving preferences based on the user's configuration, and sends the user's energy-saving preferences or the incremental part of the energy-saving preferences to the energy-saving device, and the energy-saving device determines the first energy-saving preference information based on the received content. Obviously, the terminal can also directly determine the first energy-saving preference information after determining the user's energy-saving preference, and report the first energy-saving preference information or the incremental part of the first energy-saving preference information directly to the energy-saving device. In practice, when the user configures the energy-saving preference for the first time, the terminal acts as an agent to register the user with the energy-saving device.

Through the human-machine interaction interface provided by the terminal, the user can configure, on a specific application offered by the terminal, the energy-saving preference for basic communication capability such as voice, video, messaging, and data, the energy-saving preference for enhanced communication capability such as QoS, network slicing, and edge computing, and the energy-saving preference for the application; e.g., service quality (e.g., audio bit rate, video resolution, etc.), service availability, service continuity, busy and idle periods, a corresponding service fee rate, etc. The application sends the configuration results to the service application device, which determines the second energy-saving preference information based on the configuration results, and reports the second energy-saving preference information or the incremental part of the second energy-saving preference information to the energy-saving device. In practice, when the user configures the energy-saving preference for the first time, the service application device acts as an agent to register the user with the energy-saving device.

Specifically, the second energy-saving preference information includes:
at least one preference among the basic communication capability preference, the enhanced communication capability preference, and the application preference corresponding to each terminal;
a statistical value of at least one of the basic communication capability preference, the enhanced communication capability preference, or the application preference.

The statistical value of the basic communication capability preference includes: the proportion of each preference type, such as each video, voice, or messaging, etc. determined based on the basic communication capability preferences of multiple terminals. Similarly, the statistical value of the enhanced communication capability preference includes: the proportion of each slicing and QoS preference type determined based on the enhanced communication capability preferences of multiple terminals. The statistical value of the application preference includes: the proportion of each application preference type determined based on the application preferences of multiple terminals.

In some embodiments, the generating the user-level energy-saving instruction based on the first energy-saving preference information and/or the second energy-saving preference information includes:
determining, based on the first energy-saving preference information and/or the second energy-saving preference information, at least one preference of the target terminal among a network access type preference, a connection rate preference, a basic communication capability preference, an enhanced communication capability preference, and an application preference;
determining the user-level energy-saving instruction corresponding to the target terminal based on the at least one preference.

In some embodiments, the determining the user-level energy-saving instruction corresponding to the target terminal based on the at least one preference includes:
determining, based on the network access type preference, an expected connection probability for the target terminal to access at least one type of access network;
determining, based on the connection rate preference and the expected connection probability for the target terminal to access the at least one type of access network, expected average uplink and downlink rates corresponding to the at least one type of access network;
determining, based on the basic communication capability preference and/or the enhanced communication capability preference and in combination with a resource condition of the core network and/or the at least one type of access network, a user-level parameter corresponding to the core network and/or the at least one type of access network;
generating the user-level energy-saving instruction based on the expected average uplink and downlink rates corresponding to the at least one type of access network and the user-level parameter corresponding to the core network and/or the at least one type of access network.

The connection rate preference includes: based on the user's required average connection rate and the expected connection probability of at least one type of access network, the expected average uplink and downlink rates corresponding to each access network can be determined.

The user-level parameter includes: network resource allocation, a QoS level and other related parameter.

The energy-saving device may pre-store individual preference mapping information, wherein the individual preference mapping information indicates at least one of the followings:
various combinations of the basic communication capability preference, the enhanced communication capability preference, and the resource conditions of the fixed access network, the mobile access network, the satellite access network, and the core networks, the respective user-level parameter corresponding to the above.

In practice, the individual preference mapping information is queried based on the basic communication capability preference, the enhanced communication capability preference and the resource condition of each network, to obtain the corresponding user-level parameter.

Specifically, the determining the user-level energy-saving instruction corresponding to the target terminal based on the at least one preference may include the following steps.
Step 01: determining, based on the network access type preference, an expected connection probability for the target terminal to access at least one type of access network. For example, the core network includes a fixed access network, a mobile access network, and a satellite access network. Based on the user's network access type preference (i.e., a preferred network access type), the expected connection probabilities for the terminal to access the fixed access network, the mobile access network, and the satellite access network are determined, denoted as UFa, UMa, and Usa, respectively;
Step 02: calculating, based on the connection rate preference (such as average connection rate requirement) and the expected connection probability for the target terminal to access the at least one type of access network, expected average uplink and downlink rates corresponding to the at least one type of access network, denoted as DFa, DMa, and DSa respectively;
   The calculation may involve multiplying the connection rate preference (such as the average connection rate requirement) corresponding to each access network by the expected connection probability to access each access network. For example, the average connection rate requirement is 100 Mbps, and the expected connection probability of the fixed access network is 20%, then the expected average uplink and downlink rates corresponding to the fixed access network may be determined to be 20 Mbps.
Step 03: determining, based on the basic communication capability preference and/or the enhanced communication capability preference and in combination with a resource condition of the core network and/or the at least one type of access network, a user-level parameter corresponding to the core network and/or the at least one type of access network, such as network resource allocation, a QoS level, etc.;

The energy-saving device may pre-store individual preference mapping information, which includes: various combinations of the basic communication capability preference, the enhanced communication capability preference, and the resource conditions of the fixed access network, the mobile access networks, the satellite access network and the core network, and the respective user-level parameter corresponding to the above.

In practice, the corresponding user-level parameter is determined based on the basic communication capability preference and the enhanced communication capability preference of the target terminal, and in combination with the resource conditions of the fixed access network, the mobile access network, the satellite access network and the core network.

Step 04: generating, based on the result obtained in step 02 (i.e., the expected average uplink and downlink rates corresponding to at least one type of access network) and the result obtained in step 03 (i.e., the user-level parameters corresponding to the core network and/or at least one type of access network), an adjustment instruction for a personalized parameter of the target terminal (including uplink and downlink rates, network resource allocation, a QoS level, etc.), namely, a user-level energy-saving instruction.

Specifically, the user-level energy-saving instruction may be with respect to the core network and/or the access network. For example, the user-level energy-saving instruction may instruct a core network device A to limit the downlink rate of a user 1 (or a terminal 1) to 20Mbps, or instruct the core network device A to adjust the QoS level (QoS Class Identifier (QCI)/5G QoS Identifier, 5QI)) of the user 1 (or the terminal 1) from 6 to 9.

The first energy-saving preference information may be presented in the form of a list. Table 1 below is an energy-saving preference list for an individual user, which records the first energy-saving preference information corresponding to the terminal of the individual user;

**Table 1**

| User | Access type preference | Connection rate preference | Basic communication capability preference | Enhanced communication capability preference | Application preference | Service fee rate |
|---|---|---|---|---|---|---|
| A | Preferred mobile access | Average connection rate requirement 20 Mbps | Video resolution requirement 720p | No need for QoS enhancement, network slicing, and edge computing | No need for application acceleration (CDN, Cache, etc.) | Low |
| B | Preferred mobile and fixed access | Average connection rate requirement 100Mbps | Video resolution requirement 1080p | QoS enhancement needed, but no need for network slicing and edge computing | No need for application acceleration (CDN, Cache, etc.) | Medium -low |

The CDN refers to a Content Delivery Network.

As shown in Table 1, the energy-saving preference list of an individual user includes one or more energy-saving preferences of a single user regarding the access type, the connection rate, the basic communication capability, the enhanced communication capability, and the application.

Based on the energy-saving preference list of the individual user, the energy-saving device maps the energy-saving preference to the user's personalized parameters for the access network and core network in the area where the individual user is located. The mapping method is a network requirement mapping method oriented to the individual user's Service Level Agreement (SLA). Based on the mapping result, the energy-saving device generates the user's personalized parameter (including uplink and downlink rates, network resource allocation, a QoS level, etc.) adjustment instruction as the user-level energy-saving instruction. The network requirement mapping method oriented to the individual user's SLA can refer to the above-mentioned method of determining the user-level energy-saving instruction corresponding to the target terminal based on the at least one preference. This will not be repeated here.

In some embodiments, the generating the device-level energy-saving instruction based on the first energy-saving preference information and/or the second energy-saving preference information includes:
determining, based on the first energy-saving preference information and/or the second energy-saving preference information, a statistical value of at least one preference of the terminal group among a network access type preference, a connection rate preference, a basic communication capability preference, an enhanced communication capability preference, and an application preference;
determining the device-level energy-saving instruction corresponding to the terminal group based on the determined statistical value of the at least one preference.

The energy-saving device may determine, based on the received first energy-saving preference information of the multiple terminals, the statistical value of at least one of the network access type preference and the connection rate preference of the terminal group; for example, the statistical value of the network access type preference includes: the preferred proportion of each type of access network; the statistical value of the connection rate preference may be an average value.

The energy-saving device may determine, based on the second energy-saving preference information, a statistical value of at least one of the basic communication capability preference, the enhanced communication capability preference, or the application preference.

In some embodiments, the determining the device-level energy-saving instruction corresponding to the terminal group base on the determined statistical value of at least one preference includes:
determining, based on the statistical value of the network access type preference, the expected average number of terminals among the terminal group that access at least one type of access network and the expected average number of terminals among the terminal group that access the core network;
calculating an expected capacity requirement corresponding to the at least one type of access network and an expected capacity requirement corresponding to the core network based on the expected average number of the terminals that access the at least one type of access network, the expected average number of the terminals that access the core network, and the statistical value of the connection rate preference;
generating as the device-level energy-saving instruction, based on the expected capacity requirement corresponding to the at least one type of access network and the expected capacity requirement corresponding to the core network, a capacity adjustment instruction for the core network and the at least one type of access network in the area where the terminal group is located.

In some embodiments, the determining the device-level energy-saving instruction corresponding to the terminal group base on the determined statistical value of at least one preference includes:
determining, based on the statistical value of the basic communication capability preference and/or the statistical value of the enhanced communication capability preference, information of a network function configuration and/or information of a service capability configuration corresponding to the core network and the at least one type of access network, and an expected average number of terminals corresponding to the network function configuration and/or the service capability configuration;
generating as the device-level energy-saving instruction, based on the information of the network function configuration and/or the information of the service capability configuration and the expected average number of terminals corresponding to the network function configuration and/or the service capability configuration, a first configuration parameter adjustment instruction for the core network and the at least one type of access network in the area where the terminal group is located.

The information of the network function configuration includes configuration parameters related to QoS enhancement, network slicing, edge computing, etc.

Service capability configuration includes configuration parameters related to an audio resolution, a video resolution, etc.

In some embodiments, the determining the device-level energy-saving instruction corresponding to the terminal group base on the determined statistical value of at least one preference includes:
determining application support configuration information corresponding to the core network and the at least one type of access network, and an expected average number of terminals corresponding to the application support configuration information based on the statistical value of the application preference;
generating as the device-level energy-saving instruction, based on the application support configuration information and the expected average number of terminals corresponding to the application support configuration information, a second configuration parameter adjustment instruction for the core network and the at least one type of access network in an area where the terminal group is located.

Application supports configuration information including configuration parameters such as the CDN and the Cache.

Specifically, the energy-saving device may pre-store group preference mapping information, wherein the group preference mapping information indicates at least one of the followings:
the information of the network function configuration corresponding to statistical values of various basic communication capability preferences and statistical values of various enhanced communication capability preferences;
the information of the service capability configuration corresponding to statistical values of various basic communication capability preferences and statistical values of various enhanced communication capability preferences; or
the application support configuration information corresponding to statistical values of various application preferences.

In practice, the preference mapping information is queried by obtaining the statistical values of the basic communication capability preference, the statistical values of the enhanced communication capability preference and/or the statistical values of the application preference, thereby obtaining the corresponding configuration information (such as information of a network function configuration, service capability configuration information, application support configuration information). Then the first configuration parameter adjustment instruction or a second configuration parameter adjustment instruction is generated based on the configuration information.

In practice, the device-level energy-saving instruction may include at least one of the first configuration parameter adjustment instruction, the second configuration parameter adjustment instruction, or the capacity adjustment instruction.

The determining the device-level energy-saving instruction corresponding to the terminal group based on the determined statistical value of the at least one preference may specifically include the following steps.

Step 11: calculating, based on the statistical value of the access type preference (such as the preferred proportion of each access type), the respective expected average numbers UF, UM, US of terminals for the fixed access network, the mobile access network, and the satellite access network among the terminal group and the expected average number UC of terminals for the core network (UC=UF+UM+US).

Step 12: calculating, based on the statistical value of the expected average number of terminals and the connection rate preference (e.g., the average value of the average connection rate requirement configured by the user, such as 15Mbps, 30Mbps, etc.), the expected capacity requirements CF, CM, CS for the fixed access network, the mobile access network, and the satellite access network and the expected capacity requirement CC for the core network.

The expected capacity requirements of the fixed access network, the mobile access network, and the satellite access network are calculated by multiplying the expected average number of terminals by the statistical value of the connection rate preference.

The expected capacity requirement CC of the core network=CF+CM+CS.

Step 13: determining, based on the statistical values of the basic communication capability preference and the statistical values of the enhanced communication capability preference, the network function configuration (including QoS enhancement, network slicing, edge computing, etc.) and service capability configuration (including an audio resolution, a video resolution, etc.) for the fixed access network, the mobile access network, the satellite access network and the core network, and determining the expected average number of terminals corresponding to the above network function configuration and service capability configuration.

Step 14: determining, based on the statistical value of the application preference, the application support configuration (including configuration of the CDN, the Cache, etc.) of the fixed access network, the mobile access network, the satellite access network and the core network, and determining the expected average number of terminals corresponding to the above application support configuration.

Step 15: generating, based on the result of step 12, the capacity adjustment instruction for the access network and core network in the area; generating, based on the results of steps 13 and 14, a configuration parameter adjustment instruction for the access network and core network in the area.

Specifically, the device-level energy-saving instruction may be with respect to the core network and/or access network. For example, the device-level energy-saving instruction may instruct the core network device A to reduce the capacity from 1000TPS to 600TPS in a time period [t1, t2], or may instruct the core network device A to disable the network function configurations a, b, and c.

The second energy-saving preference information may be presented in the form of a list. Table 2 below is an energy-saving preference list for a user group, which records the second energy-saving preference information corresponding to the terminals of the user group;

**Table 2**

| User groups | Access type preference statistics | Connection rate preference statistics | Basic communication capability preference statistics | Enhanced communication capability preference statistics | Application preference statistics | Service fee rate statistics |
|---|---|---|---|---|---|---|
| 1 | Preferred mobile access 90% | Average connection rate requirement 15 Mbps | Video resolution requirement 720p (90%) | No need for QoS enhancement, network slicing, and edge computing 90% | No need for application acceleration (CDN, cache, etc.) 90% | Low |
| 2 | Preferred mobile and fixed access 80% | The average connection rate requirement 75 Mbps | Video resolution requirement 1080p (80%) | QoS enhancement needed, but no need for network slicing, and edge computing: 80% | No need for application acceleration (CDN, cache, etc.): 80% | Medium-low |

As shown in Table 2, the energy-saving preference list of the user group includes statistical values of one or more energy-saving preferences of the user group regarding the access type, the connection rate, the basic communication capability, the enhanced communication capability, and the application.

Based on the energy-saving preference list of the user group, the energy-saving device can map the energy-saving preferences to the network capacity and configuration parameters for the access network and the core network in the area where the user group is located. The mapping method is a weighted mapping of a network requirement oriented to the user group's Service Level Agreement (SLA). Based on the mapping result, the energy-saving device generates the capacity and configuration parameter adjustment instructions for the access network and the core network in the area as device-level energy-saving instructions. The network requirement weighted mapping method oriented to the user group's SLA can refer to the determining the device-level energy-saving instructions corresponding to the terminal group based on the determined statistical value of the at least one preference. This will not be repeated here.

In some embodiments, the sending the device-level energy-saving instruction and/or the user-level energy-saving instruction to the target network includes:
determining a network involved in a configuration parameter in the device-level energy-saving instruction and/or the user-level energy-saving instruction;
when the configuration parameter in the device-level energy-saving instruction involves a core network, sending the device-level energy-saving instruction to the core network;
when the configuration parameter in the device-level energy-saving instruction involves an access network, sending the device-level energy-saving instruction to the corresponding access network;
when the configuration parameter in the user-level energy-saving instruction involves a core network, sending the user-level energy-saving instruction to the core network;
when the configuration parameter in the user-level energy-saving instruction involves an access network, sending the user-level energy-saving instruction to the corresponding access network.

It should be noted that when the access network includes multiple types, such as the fixed access network, the mobile access network, and the satellite access network, it is necessary to further determine which access network the configuration parameter involves, and send the device-level energy-saving instruction and/or the user-level energy-saving instruction to the corresponding access network.

FIG. 2 is another schematic flowchart of a network energy-saving method provided by an embodiment of the present disclosure. As shown in FIG. 2, the network energy-saving method is applied to a network device, including:
step 201: receiving a device-level energy-saving instruction and/or a user-level energy-saving instruction from an energy-saving device;
step 202: performing energy-saving optimization operations based on the device-level energy-saving instruction and/or the user-level energy-saving instruction.

Specifically, the network device may be a network device of a core network, a network device of a fixed access network, a network device of a mobile access network, or a network device of a satellite access network.

In some embodiments, the performing the energy-saving optimization operation based on the user-level energy-saving instruction includes:
determining a resource requirement for each target terminal based on the user-level energy-saving instruction for at least one target terminal;
when a network resource is capable of simultaneously meeting the resource requirement of all of the at least one target terminal, performing the energy-saving optimization operation based on the user-level energy-saving instruction;
when the network resource is incapable of simultaneously meeting the resource requirement of all of the at least one target terminal, performing a respective energy-saving optimization operation for each of the at least one target terminal based on a priority of each target terminal.

Specifically, after generating a user-level energy-saving instruction, the energy-saving device sends it to the core network and the fixed/mobile/satellite access network. Upon receiving the user-level energy-saving instruction, the core network and the fixed access network, the mobile access network and/or the satellite access network first evaluate whether the resource requirements of all target terminals can be met. When they can be met, the resource allocation of each target terminal is adjusted based on the user-level energy-saving instruction; when they cannot be met, the user competition is performed, i.e., resources are allocated based on the priority of user corresponding to each target terminal.

The core network and the fixed access network, the mobile access network and/or the satellite access network can also monitor device energy consumption in real time, calculate the value (percentage) of the average energy consumption reduction. This value, as a user-level energy-saving optimization result, is fed back to the energy-saving device.

A user competition method is as follows: based on the service fee rate and a key guarantee requirement of the terminal, the terminal priority is quantified within the range of [0,100] percentile, divided into three intervals and the corresponding resource allocation policy is executed.
1) High interval: [80,100] percentile, which guarantees 100% of the terminal's resource requirement.
2) Medium interval: [60,80) percentile, which guarantees 50% of the terminal's resource requirement, and the remaining 50% of the terminal's resource requirement is allocated in a competitive manner.
3) Low interval: [0,60) percentile, which does not guarantee the resource requirement of the terminal, and 100% of the resource requirement of the terminal is allocated in a competitive manner.

For example, in a specific area, a priority of the high-interval terminal [H1,H2, ...,Hx] is [PH1,PH2, ..., PHx ]; a priority of the medium-interval terminal [M1,M2, ...,My] is [PM1,PM2, ..., PMy ]; and a priority of the low-interval terminal [L1,L2, ..., Lz ] is [PL1,PL2, ... PLz ].

The network capacity of this area is C; the total resource requirement of high-interval terminals is RH=RH1+RH2+ ... + RHx; the total resource requirement of medium-interval terminals is RM=RM1+RM2+ ... + RMy; the total resource requirement of low-interval terminals is RL=RL1+RL2+ ... + RLz. Then the resource obtained by the high-interval terminal H1 is AH1 = RH1; the resource obtained by the medium-interval terminal M1 is AM1 = 0.5RM1+(C-RH-0.5RM)*0.5PM1/(0.5PM1+0.5PM2+...+0.5PMy+PL1+PL2+...+PLz); the resource obtained by the low-interval terminal L1 is AL1=AL1=(C-RH-0.5RM)*PL1/(0.5PM1+0.5PM2+...+0.5PMy+PL1+PL2+...+ PLz).

In some embodiments, the performing an energy-saving optimization operation based on the device-level energy-saving instruction includes:
determining a total resource requirement based on the device-level energy-saving instruction;
when a network resource is capable of meeting the total resource requirement, performing the energy-saving optimization operation based on the device-level energy-saving instruction;
when the network resource is incapable of meeting the total resource requirement, sending an error response to the energy-saving device.

Specifically, after generating a device-level energy-saving instruction, the energy-saving device sends it to the core network and the fixed access network, the mobile access network and/or the satellite access network.

Upon receiving the device-level energy-saving instruction, the core network and the fixed access network, the mobile access network and/or the satellite access network first evaluate whether an adjustment requirements of the capacity and the configuration parameter of the device-level energy-saving instruction can be met. When they can be met, the capacity and the configuration parameter of the device are adjusted based on the device-level energy-saving instruction; when they cannot be met, an error response is returned to the energy-saving device, indicating which adjustment requirement cannot be executed, so that the energy-saving device can re-issue the device-level energy-saving instruction.

The core network and the fixed access network, the mobile access network and/or the satellite access network can also monitor device energy consumption in real time, calculate the value (percentage) of the average energy consumption reduction. This value, as a device-level energy-saving optimization result, is fed back to the energy-saving device.

The method provided by the embodiments of the present disclosure proposes that, based on the user's energy-saving preferences regarding the access type, the connection rate, the basic communication capability, the enhanced communication capability, and the application, the energy-saving device generates an energy-saving instruction to instruct the core network and access network to perform device-level and user-level energy-saving optimization. When resources are insufficient, a user competition mechanism based on user priority is introduced, and the value (percentage) of the average energy consumption reduction is calculated, and it achieves the energy-saving optimization at both device granularity and user granularity. In this way, the energy-saving optimization is performed by combining user requirements and user characteristics, which can reduce network energy consumption as much as possible without affecting user experience, thereby meeting the refined energy-saving requirements of future networks.

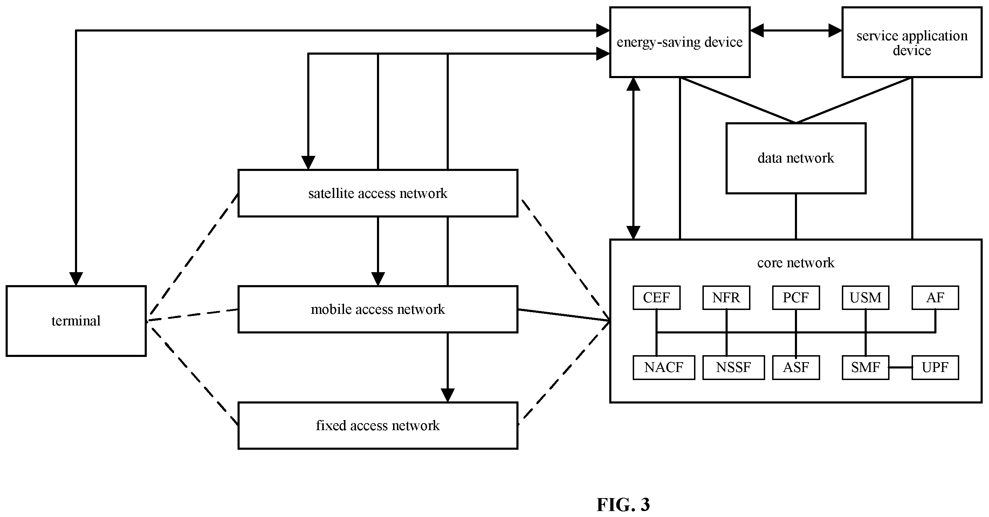

FIG. 3 shows an energy-saving network system based on a user preference and competition provided by an embodiment of the present disclosure. As shown in FIG. 3, the energy-saving network system includes: a terminal, an access network, a core network, a data network, an energy-saving device, and a service application device. The access network includes a fixed access network, a mobile access network, and a satellite access network. The energy-saving device receives the user's energy-saving preference from the terminal and the service application device, generates a device-level energy-saving instruction and a user-level energy-saving instruction, and sends them to the core network, the fixed access network, the mobile access network, and the satellite access network. The fixed access network, the mobile access network, the satellite access network, and the core access network perform device-level energy-saving optimization and competitive user-level energy-saving optimization based on the energy-saving instruction.

Specifically, the terminal is configured to obtain the user's energy-saving preferences regarding the access type (such as fixed access, mobile access, satellite access) and the connection rate, and report them to the energy-saving device. The user-configured energy-saving preferences include: a preferred access type, an average connection rate requirement, busy and idle periods, etc., and a corresponding service fee rate.

The service application device is configured to obtain the user's energy-saving preferences for basic communication capabilities such as voice, video, messaging, and data, the energy-saving preferences for enhanced communication capabilities such as QoS, network slicing, and edge computing, and the energy-saving preferences of applications, and report them to the energy-saving device. The energy-saving preferences obtained by the service application device include service quality (e.g., audio bit rate, video resolution, etc.), service availability, service continuity, busy and idle periods, etc., and a corresponding service fee rate.

The energy-saving device is configured to receive user's energy-saving preferences reported by the terminal and the service application device, perform aggregation processing and data analysis, generate the device-level energy-saving instruction and the user-level energy-saving instruction, and send them to the core network and the fixed access network, the mobile access network and/or the satellite access network.

The access network: the system must at least include a mobile access network, and may further include a fixed access network and a satellite access network. The fixed access network, the mobile access network and/or the satellite access network perform device-level energy-saving optimization based on the device-level energy-saving instruction, including adjusting access configuration, adjusting device capacity, enabling a device sleep mode, etc. Based on the user-level energy-saving instruction and the user competition mechanism (when resources are insufficient, resources are allocated based on the user priority), the user-level energy-saving optimization is performed, including adjusting uplink and downlink rates, adjusting a user QoS level, etc. The result of the energy-saving optimization is fed back to the energy-saving device.

The core network is a multi-access converged core network, with multi-access convergence including FMC and FMSC. The core network is configured to perform device-level energy-saving optimization based on the device-level energy-saving instruction, including adjusting network configuration, adjusting device capacity, and enabling a device sleep mode, etc. Based on the user-level energy-saving instruction and the user competition mechanism (when resources are insufficient, resources are allocated based on the user priority), the user-level energy-saving optimization is performed, including adjusting network resource allocation and adjusting the user QoS level, etc. The results of the energy-saving optimization are fed back to the energy-saving device.

Data Network: no modifications or upgrades are required.

In the embodiments of the present disclosure, an energy-saving network system composed of a terminal, a fixed access network, a mobile access network, a satellite access network, a core network, a data network, an energy-saving device, a service application device, etc. are proposed to perform energy-saving design of the end-to-end system. The energy-saving device is configured as a centralized control node to achieve cross-domain integration. In this way, the energy-saving optimization is achieved from a global perspective, which can reduce the overall energy consumption of the end-to-end network and meet the end-to-end energy-saving requirements of future networks.

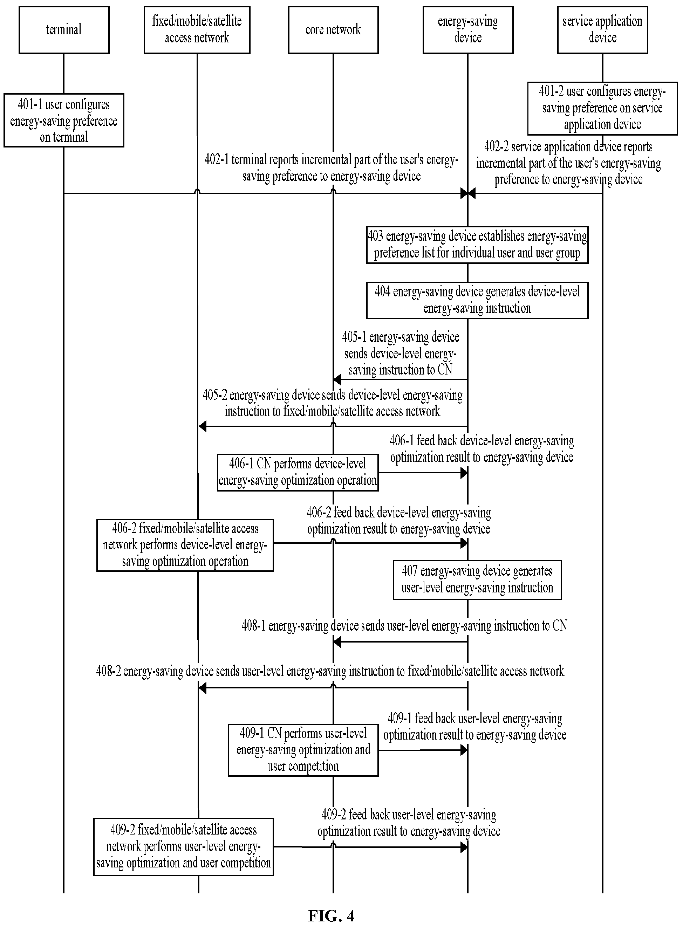

FIG. 4 is a schematic flowchart of an energy-saving network method based on user preference and competition provided by an embodiment of the present disclosure. As shown in FIG. 4, the method includes:
step 401: the user configures the energy-saving preference regarding the access type and the connection rate on the terminal; the user configures the energy-saving preference for a basic communication capability, an enhanced communication capability, and an application on the service application device;
step 402: after collecting the user's energy-saving preference, the terminal and the service application device report the incremental part of the user's energy-saving preference to the energy-saving device;
step 403: the energy-saving device establishes an energy-saving preference list for an individual user and an energy-saving preference list for a user group;
step 404: based on a network requirement weighted mapping method oriented to user group's SLA, the energy-saving device generates a device-level energy-saving instruction, including a capacity and a configuration parameter adjustment instruction for the access network and the core network in the area;
step 405: the energy-saving device sends a device-level energy-saving instruction to the core network and at least one of the fixed access network, the mobile access network, or the satellite access network;
step 406: the core network and at least one of the fixed access network, the mobile access network, or the satellite access network perform a device-level energy-saving optimization operation, adjust the capacity and a configuration parameter of the device based on the device-level energy-saving instruction, and feed back the value (percentage) of the average energy consumption reduction as the device-level energy-saving optimization result to the energy-saving device;
step 407: based on the network requirement mapping method oriented to the individual user's SLA, the energy-saving device generates a user-level energy-saving instruction, including an adjustment instruction for a personalized parameter of the user (including uplink and downlink rates, network resource allocation, a QoS level, etc.);
step 408: the energy-saving device sends the user-level energy-saving instruction to the core network and at least one of the fixed access network, the mobile access network, or the satellite access network;
step 409: the core network and at least one of the fixed access network, the mobile access network, or the satellite access network perform a user-level energy-saving optimization operation, adjust user's resource allocation based on the user-level energy-saving instruction and user competition mechanism, and feed back the value (percentage) of average energy consumption reduction as the user-level energy-saving optimization result to the energy-saving device.

The steps regarding the user competition mechanism, the generating of the user-level energy-saving instructions, and the generating of the device-level energy-saving instructions, etc. have been specifically described in the methods illustrated in FIGs. 1 and 2, and will not be repeated here.

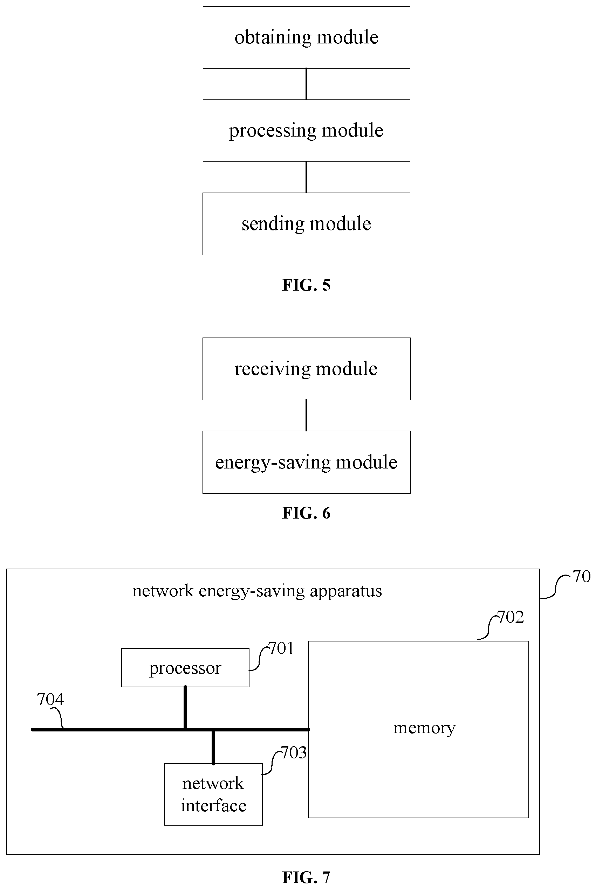

FIG. 5 is a structural diagram of a network energy-saving apparatus provided by an embodiment of the present disclosure. As shown in FIG. 5, the apparatus is applied to an energy-saving device, including:
an obtaining module, configured to obtain first energy-saving preference information and/or second energy-saving preference information; the first energy-saving preference information represents network preference information of a target terminal; the second energy-saving preference information represents network preference information of a terminal group;
a processing module, configured to generate a device-level energy-saving instruction and/or a user-level energy-saving instruction based on the first energy-saving preference information and/or the second energy-saving preference information;
a sending module, configured to send the device-level energy-saving instruction and/or the user-level energy-saving instruction to a target network; the device-level energy-saving instruction and/or the user-level energy-saving instruction is received by the target network and used to perform an energy-saving optimization operation; the target network includes a core network and/or an access network.

It should be noted that, in the implementation of the corresponding network energy-saving method, the network energy-saving apparatus provided in the above embodiments is described merely by way of example based on the division of the above program modules. In practical applications, the above processing may be allocated to and accomplished by different program modules as needed, that is, the internal structure of the energy-saving device is divided into different program modules to complete all or part of the above-described processing. In addition, the apparatus provided in the above embodiments and the corresponding method embodiments share the same inventive concept. The specific implementation process is detailed in the method embodiment, which will not be repeated here.

FIG. 6 is a structural diagram of the network energy-saving apparatus provided by an embodiment of the present disclosure. As shown in FIG. 6, the apparatus is applied to a network device, including:
a receiving module, configured to receive a device-level energy-saving instruction and/or a user-level energy-saving instruction from an energy-saving device;
an energy-saving module, configured to perform an energy-saving optimization operation based on the device-level energy-saving instruction and/or the user-level energy-saving instruction.

It should be noted that, in the implementation of the corresponding network energy-saving method, the network energy-saving apparatus provided in the above embodiment is described merely by way of example based on the division of the above program modules. In practical applications, the above processing may be allocated to and accomplished by different program modules as needed, that is, the internal structure of the network device is divided into different program modules to complete all or part of the above-described processing. In addition, the apparatus provided in the above embodiment and the corresponding method embodiments share the same inventive concept. The specific implementation process is detailed in the method embodiment, which will not be repeated here.

FIG. 7 is a structural diagram of the network energy-saving apparatus provided by an embodiment of the present disclosure. As shown in FIG. 7, the network energy-saving apparatus 70 includes: a processor 701 and a memory 702 configured to store a computer program executable by the processor.

When the network energy-saving apparatus 70 is applied to an energy-saving device, the processor 701 is configured to execute the computer program to: obtain first energy-saving preference information and/or second energy-saving preference information; the first energy-saving preference information represents network preference information of a target terminal; the second energy-saving preference information represents network preference information of a terminal group; generate a device-level energy-saving instruction and/or a user-level energy-saving instruction based on the first energy-saving preference information and/or the second energy-saving preference information; send the device-level energy-saving instruction and/or the user-level energy-saving instruction to s target network; the device-level energy-saving instruction and/or the user-level energy-saving instruction are received by the target network and used to perform an energy-saving optimization operation; the target network includes a core network and/or an access network. Specifically, the network energy-saving apparatus may also execute the method shown in FIG. 1, which shares the same inventive concept as the network energy-saving method embodiment shown in FIG. 1. The specific implementation process is detailed in the method embodiment, which will not be repeated here.

When the network energy-saving apparatus 70 is applied to a network device, the processor 701 is configured to execute the computer program to: receive a device-level energy-saving instruction and/or a user-level energy-saving instruction from an energy-saving device; perform an energy-saving optimization operation based on the device-level energy-saving instruction and/or the user-level energy-saving instruction. Specifically, the network energy-saving apparatus may also execute the method shown in FIG. 2, which shares the same inventive concept as the network energy-saving method embodiment shown in FIG. 2. The specific implementation process is detailed in the method embodiment, which will not be repeated here.

In practical applications, the network energy-saving apparatus 70 may further include at least one network interface 703. The various components in the network energy-saving apparatus 70 are coupled together through a bus system 704. It can be understood that the bus system 704 is configured to realize the connection and communication between these components. In addition to the data bus, the bus system 704 also includes a power bus, a control bus and a status signal bus. However, for clarity, all buses are marked as the bus system 704 in FIG. 7. The number of the processor 701 may be at least one. The network interface 703 is used for wired or wireless communication between the network energy-saving apparatus 70 and other devices.

In the embodiments of the present disclosure, the memory 702 is configured to store various types of data to support the operation of the network energy-saving apparatus 70.

The methods disclosed in the embodiments of the present disclosure may be applied to, or implemented by, the processor 701. The processor 701 may be an integrated circuit chip with a signal processing capability. In the implementation process, the steps of the above method can be completed by an integrated logic circuit in the hardware of the processor 701 or by an instruction in the form of software. The above processor 701 may be a general-purpose processor, a Digital Signal Processor (DSP), or other programmable logic devices, discrete gates or transistor logic devices, discrete hardware components, etc. The processor 701 can implement or execute the methods, steps and logic block diagrams disclosed in the embodiments of the present disclosure. The general-purpose processor may be a microprocessor or any conventional processor, etc. The steps of the method disclosed in the embodiments of the present disclosure can be performed directly by a hardware decoding processor, or by a combination of hardware and software modules in the decoding processor. The software module can be stored in a storage medium, which is located in the memory 702. The processor 701 reads the information from the memory 702 and, in combination with the hardware, completes the steps of the above method.

In an exemplary embodiment, the network energy-saving apparatus 70 may be implemented by one or more Application Specific Integrated Circuits (ASIC), DSPs, Programmable Logic Devices (PLDs), complex programmable logic devices (CPLDs), Field Programmable Gate Arrays (FPGAs), general-purpose processors, controllers, Micro Controller Units (MCUs), microprocessors, or other electronic components configured to execute the aforementioned method.

The embodiments of the present disclosure further provide a computer-readable storage medium storing a computer program.

When the computer-readable storage medium is applied to an energy-saving device, and the computer program is executed by a processor, the following is performed: obtaining first energy-saving preference information and/or second energy-saving preference information; the first energy-saving preference information represents network preference information of a target terminal; the second energy-saving preference information represents network preference information of a terminal group; generating a device-level energy-saving instruction and/or a user-level energy-saving instruction based on the first energy-saving preference information and/or the second energy-saving preference information; sending the device-level energy-saving instruction and/or the user-level energy-saving instruction to a target network; the device-level energy-saving instruction and/or the user-level energy-saving instruction are received by the target network and used to perform an energy-saving optimization operation; the target network includes a core network and/or an access network. Specifically, the computer program may also execute the method shown in FIG. 1, which shares the same inventive concept as the network energy-saving method embodiments shown in FIG. 1. The specific implementation process is detailed in the method embodiments, which will not be repeated here.

When the computer-readable storage medium is applied to a network device, and the computer program is executed by a processor, the following is performed: receiving a device-level energy-saving instruction and/or a user-level energy-saving instruction from an energy-saving device; performing an energy-saving optimization operation based on the device-level energy-saving instruction and/or the user-level energy-saving instruction. Specifically, the computer program may also execute the method shown in FIG. 2, which shares the same inventive concept as the network energy-saving method embodiment shown in FIG. 2. The specific implementation process is detailed in the method embodiment, which will not be repeated here.

In the embodiments provided by the present disclosure, it should be understood that the disclosed apparatus and method can be implemented in other ways. The device embodiments described above are merely illustrative. For example, the division of the units is only a logical function division, and in actual implementation there may be other division methods. For instance, multiple units or components may be combined, or may be integrated into another system, or some features can be omitted, or not executed. In addition, the coupling, direct coupling, or communication connection between the components shown or discussed may be through some interfaces, and the indirect coupling or communication connection between the devices or units may be electrical, mechanical or in other forms.

The units described above as separate components may or may not be physically separated, and the components displayed as units may or may not be physical units, that is, they may be located in one place or distributed across multiple network units. Some or all of the units may be selected based on actual needs to achieve the objectives of the present embodiment.

In addition, the functional units in each embodiment of the present disclosure may all be integrated into a single processing unit, or each unit may be implemented as a separate individual unit, or two or more units may be integrated into one unit. The above-mentioned integrated units may be implemented in the form of hardware or through a combination of hardware and software functional units.

Those of ordinary skill in the art can understand that all or part of the steps of the above method embodiment may be implemented by hardware related to program instructions. The aforementioned program may be stored in a computer-readable storage medium. When the program is executed, it executes the steps described in the above method embodiment. The aforementioned storage medium includes: mobile storage devices, Read-Only Memory (ROM), Random Access Memory (RAM), magnetic disks or optical disks, and any other media that can store program code.

Alternatively, if the above-mentioned integrated unit is implemented in the form of a software functional module and sold or used as an independent product, it may also be stored in a computer-readable storage medium. Based on such an understanding, essential parts, or parts contributing to the related art of the embodiments of the present disclosure may be implemented in a form of a software product. The computer software product is stored in a storage medium, and includes instructions to cause a computer device (which can be a personal computer, a server, or a network device, etc.) to execute all or part of the methods described in various embodiments of the present disclosure. The aforementioned storage media include: mobile storage devices, Read-Only Memory (ROM), Random Access Memory (RAM), magnetic disk or optical disc and other media that can store program code.

It should be noted that terms "first", "second" and the like are used to distinguish similar objects, and are not intended to describe a specific order or sequence.

In addition, the technical solutions according to the embodiments of the present disclosure may be combined in any manner, provided there is no conflict between them.

The above are merely specific embodiments of the present disclosure, but the protection scope of the present disclosure is not limited thereto. Any modifications or substitutions that can be easily conceived by those skilled in the art within the technical scope disclosed herein shall fall within the protection scope of the present disclosure. Therefore, the protection scope of the present disclosure shall be defined by the scope of the claims.

## Claims

1. A network energy-saving method, applied to an energy-saving device, comprising:
obtaining first energy-saving preference information and/or second energy-saving preference information; wherein the first energy-saving preference information represents network preference information of a target terminal; the second energy-saving preference information represents network preference information of a terminal group;
generating a device-level energy-saving instruction and/or a user-level energy-saving instruction based on the first energy-saving preference information and/or the second energy-saving preference information;
sending the device-level energy-saving instruction and/or the user-level energy-saving instruction to a target network; wherein the device-level energy-saving instruction and/or the user-level energy-saving instruction are received by the target network and used to perform an energy-saving optimization operation; the target network comprises a core network and/or an access network.

2. The method according to claim **1,** wherein the obtaining the first energy-saving preference information and/or the second energy-saving preference information comprises at least one of the followings:
receiving the first energy-saving preference information from the target terminal, wherein the first energy-saving preference information comprises: a network access type preference and/or a connection rate preference; or
receiving the second energy-saving preference information from a service application device, wherein the second energy-saving preference information comprises at least one of the followings: a basic communication capability preference, an enhanced communication capability preference, or an application preference.

3. The method according to claim **1,** wherein the generating the user-level energy-saving instruction based on the first energy-saving preference information and/or the second energy-saving preference information comprises:
determining, based on the first energy-saving preference information and/or the second energy-saving preference information, at least one preference of the target terminal among a network access type preference, a connection rate preference, a basic communication capability preference, an enhanced communication capability preference, and an application preference;
determining the user-level energy-saving instruction corresponding to the target terminal based on the at least one preference.

4. The method according to claim 3, wherein the determining the user-level energy-saving instruction corresponding to the target terminal based on the at least one preference comprises:
determining, based on the network access type preference, an expected connection probability for the target terminal to access at least one type of access network;
determining, based on the connection rate preference and the expected connection probability for the target terminal to access the at least one type of access network, expected average uplink and downlink rates corresponding to the at least one type of access network;
determining, based on the basic communication capability preference and/or the enhanced communication capability preference and in combination with a resource condition of the core network and/or the at least one type of access network, a user-level parameter corresponding to the core network and/or the at least one type of access network;
generating the user-level energy-saving instruction based on the expected average uplink and downlink rates corresponding to the at least one type of access network and the user-level parameter corresponding to the core network and/or the at least one type of access network.

5. The method according to claim 1, wherein the generating the device-level energy-saving instruction based on the first energy-saving preference information and/or the second energy-saving preference information comprises:
determining, based on the first energy-saving preference information and/or the second energy-saving preference information, a statistical value of at least one preference of the terminal group among a network access type preference, a connection rate preference, a basic communication capability preference, an enhanced communication capability preference, and an application preference;
determining the device-level energy-saving instruction corresponding to the terminal group based on the determined statistical value of the at least one preference.

6. The method according to claim 5, wherein the determining the device-level energy-saving instruction corresponding to the terminal group based on the determined statistical value of the at least one preference comprises:
determining, based on the statistical value of the network access type preference, the expected average number of terminals among the terminal group that access at least one type of access network and the expected average number of terminals among the terminal group that access the core network;
calculating an expected capacity requirement corresponding to the at least one type of access network and an expected capacity requirement corresponding to the core network based on the expected average number of terminals that access the at least one type of access network, the expected average number of terminals that access the core network, and the statistical value of the connection rate preference;
generating as the device-level energy-saving instruction, based on the expected capacity requirement corresponding to the at least one type of access network and the expected capacity requirement corresponding to the core network, a capacity adjustment instruction for the core network and the at least one type of access network in the area where the terminal group is located.

7. The method according to claim 5, wherein the determining the device-level energy-saving instruction corresponding to the terminal group based on the determined statistical value of the at least one preference comprises:
determining, based on the statistical value of the basic communication capability preference and/or the statistical value of the enhanced communication capability preference, information of a network function configuration and/or information of a service capability configuration corresponding to the core network and the at least one type of access network, and an expected average number of terminals corresponding to the network function configuration and/or the service capability configuration;
generating as the device-level energy-saving instruction, based on the information of the network function configuration and/or the information of the service capability configuration and the expected average number of terminals corresponding to the network function configuration and/or the service capability configuration, a first configuration parameter adjustment instruction for the core network and the at least one type of access network in the area where the terminal group is located.

8. The method according to claim 5, wherein the determining the device-level energy-saving instruction corresponding to the terminal group based on the determined statistical value of the at least one preference comprises:
determining application support configuration information corresponding to the core network and the at least one type of access network, and an expected average number of terminals corresponding to the application support configuration information based on the statistical value of the application preference;
generating as the device-level energy-saving instruction, based on the application support configuration information and the expected average number of terminals corresponding to the application support configuration information, a second configuration parameter adjustment instruction for the core network and the at least one type of access network in an area where the terminal group is located.

9. A network energy-saving method, applied to a network device, comprising:
receiving a device-level energy-saving instruction and/or a user-level energy-saving instruction from an energy-saving device;
performing an energy-saving optimization operation based on the device-level energy-saving instruction and/or the user-level energy-saving instruction.

10. The method according to claim 9, wherein the performing the energy-saving optimization operation based on the user-level energy-saving instruction comprises:
determining a resource requirement for each target terminal based on the user-level energy-saving instruction for at least one target terminal;
when a network resource is capable of simultaneously meeting the resource requirement of all of the at least one target terminal, performing the energy-saving optimization operation based on the user-level energy-saving instruction;
when the network resource is incapable of simultaneously meeting the resource requirement of all of the at least one target terminal, performing a respective energy-saving optimization operation for each of the at least one target terminal based on a priority of each target terminal.

11. The method according to claim 9, wherein the performing the energy-saving optimization operation based on the device-level energy-saving instruction comprises:
determining a total resource requirement based on the device-level energy-saving instruction;
when a network resource is capable of meeting the total resource requirement, performing the energy-saving optimization operation based on the device-level energy-saving instruction;
when the network resource is incapable of meeting the total resource requirement, sending an error response to the energy-saving device.

12. A network energy-saving apparatus, applied to an energy-saving device, comprising:
an obtaining module, configured to obtain first energy-saving preference information and/or second energy-saving preference information; wherein the first energy-saving preference information represents network preference information of a target terminal; the second energy-saving preference information represents network preference information of a terminal group;
a processing module, configured to generate a device-level energy-saving instruction and/or a user-level energy-saving instruction based on the first energy-saving preference information and/or the second energy-saving preference information;
a sending module, configured to send the device-level energy-saving instruction and/or the user-level energy-saving instruction to a target network; wherein the device-level energy-saving instruction and/or the user-level energy-saving instruction is received by the target network and used to perform an energy-saving optimization operation; the target network comprises a core network and/or an access network.

13. A network energy-saving apparatus, applied to a network device, comprising:
a receiving module, configured to receive a device-level energy-saving instruction and/or a user-level energy-saving instruction from an energy-saving device;
an energy-saving module, configured to perform an energy-saving optimization operation based on the device-level energy-saving instruction and/or the user-level energy-saving instruction.

14. A network energy-saving apparatus, comprising a memory, a processor, and a computer program stored in the memory and executable on the processor, wherein the processor is configured to execute the program, to implement the steps of the method according to any one of claims 1 to 8; or the processor is configured to execute the program, to implement the steps of the method according to any one of claims 9 to 11.

15. A computer-readable storage medium storing a computer program, wherein the computer program is used to be executed by a processor to implement the steps of the method according to any one of claims 1 to 8; or, the computer program is used to be executed by the processor to implement the steps of the method according to any one of claims 9 to 11.
